Europäisches Patentamt

European Patent Office

Office européen des brevets

(19)

(11) Publication number: **0 063 442**

A2

(12) # EUROPEAN PATENT APPLICATION

(21) Application number: **82301781.9**

(22) Date of filing: **05.04.82**

(51) Int. Cl.³: **E 21 D 20/02**

(30) Priority: **13.04.81 US 254004**

(43) Date of publication of application:
**27.10.82 Bulletin 82/43**

(84) Designated Contracting States:
**DE FR GB**

(71) Applicant: **CELTITE INC.**
**150 Carley Court**
**Georgetown Kentucky 40324(US)**

(72) Inventor: **Plaisted, Anthony Cecil**
**2032 Blaimore Road**
**Lexington Kentucky, 40502(US)**

(72) Inventor: **Patel, Natvaral K.**
**1989 Twin ridge Drive**
**Lexington Kentucky, 40514(US)**

(74) Representative: **Shaw, Laurence**
**George House George Road**
**Birmingham, B15 1PG(GB)**

(54) Improved anchoring cartridge and method.

(57) An anchoring cartridge for use in anchoring an element, e.g. a roof bolt in a mine, contains the interactive components of a selfsetting composition and has two compartments (1, 2) each containing an interactive component (6, 8), cutting means (11) being provided to cut open the first compartment (1) and pass the first component (6) into the second compartment (2) where the components are mixed by mixing means (2, 3) and passed out of the side of the cartridge. The cartridge is pushed up a borehole (16) followed by the anchor element (18) and upward rectilinear thrust on the element actuates the cutting open of the first compartment (1) and mixing of the components (6, 8).

FIG. 3

EP 0 063 442 A2

Croydon Printing Company Ltd.

## IMPROVED ANCHORING
## CARTRIDGE & METHOD

The invention relates to an improved anchoring cartridge and method of anchoring an anchor element. More particularly, the invention is concerned with a cartridge containing separately the interactive components of a selfsetting composition which cartridge is in use placed in a borehole, broken open by the anchor element to release the components and mix them to form the selfsetting composition to anchor the anchor element, typically a roof bolt.

Roof bolts have been accepted as the primary roof support in coal and metal mines for over thirty years. It has been customary to use as a roof bolt a mechanical anchor comprising expansion shell, and a bearing plate set between the bolt head and roofline, with the bearing plate serving as the other anchor. The outer surface of the expansion shell is serrated in various shapes to provide a grip against the wall of the hole. Within the shell lies a tapered hollow plug threaded on the inside. This plug is threaded onto a bolt. In use, the bolt is set in a hole in the roof and in installation the plug is pulled down as the bolt is rotated forcing the shell to expand against the wall of the hole.    Further rotation tensions the anchor,
typically to a torque of 150 foot-pounds.

Mechanical anchors perform well in hard
competent rock where they are able to maintain a large
rock contact area.    However, in many shales, the
anchorage soon deteriorates due to the low compressive
strength, or the stratified and friable nature of such
shales and mudstones.    Exposure to humidity and air
will also accelerate deterioration leading to anchorage
failure.    Furthermore, mechanical anchors are subject
to corrosion by infiltration of acid mine water.    To
overcome these risks it is known to anchor the bolt in
a cement or resinous grout, the object being to enlarge
the area of contact with the soft rock and so increase
anchorage capacity and to offer protection from chemical
deterioration.    In one known technique the grout is
formed in situ by reacting two interactive components
in a cartridge and the invention is directed to an
improved cartridge and method of use.

It is one object of this invention to provide
a cartridge for the purpose specified adapted to supply
selfsetting composition to a predetermined anchoring
location in a borehole.    It is another object to provide
such a cartridge adapted for use in less competent rock.

It is another object to provide a cartridge of improved efficiency and economy and ease of manufacture.

According to one aspect of the invention there is provided an anchoring cartridge having two compartments, each compartment containing an interactive component of a selfsetting anchoring composition, means for breaking open a first compartment to allow the first component to enter the second compartment, the second compartment including means to allow a mix of the first and second components to pass laterally out of the second compartment.

Most preferably the first compartment is a flexible bag containing a first component which is flowable under pressure e.g. a liquid or paste, and the opening means is arranged to cut open part of the bag wall and urge the first component towards the second compartment. The opening means may be a disc having tangs and holes through which the first component may flow.

According to a much preferred feature of the invention the second compartment is generally circular in cross section and has perforated walls through which the mix may pass radially out of the cartridge. In this way there is improved control of the placing of the selfsetting composition.

For improved mixing of the ingredients the first component is preferably arranged to pass along at least part of the length of the second compartment before exiting from the second compartment via radial or side openings.

Most preferably the second compartment includes means for mixing the components as they pass through the second compartment. Such means preferably comprises providing the second compartment with mesh side walls and the components are mixed as they are urged therethrough. The mesh walls may be made of metal, plastics or the like. It is much preferred that the second component is coated on the inside of the mesh side walls of the second compartment. This has the advantage of exposing the maximum surface area of the second component to the first component. In a much preferred specific construction the second compartment comprises an inner mesh sleeve containing a paste of the second component, the inner sleeve being spaced from and held within an outer mesh sleeve, the meshes of the sleeves being arranged to intermix the components as they are urged radially out of both sleeves.

In another specific structure the second
compartment has radial exit holes remote from the point
of entry of the first component and the second compart-
ment is placed adjacent the place of entry and the two
components are passed through a mixing mesh on route to
the exit holes.   The mixing mesh causes a turbulent
flow of the components and a resulting mixing.
Preferably the second compartment comprises a tube open
at one end adjacent the first compartment and sealed at
the other end remote from the first component and the
exit holes are arranged adjacent the sealed end.

In yet another embodiment of the invention,
the second compartment comprises an outer deformable
wire or plastic mesh containing an inner cylinder of
thin walled rigid plastic filled with compressible
plastic fibre or wire wool.   A crosscut conical plastic
cap containing the second component is inserted into one
end of the cylinder.   Upon entrance of the first
component, the plastic cap opens at the crosscut,
releasing the second component together with the first
component into the plastic cylinder.   The components
are mixed as they pass along the cylinder within the
wire of plastic woven mesh.   Openings adjacent the other
end of the plastic cylinder e.g. sawtooth openings, allow exit of the mixture radially through the outer wire mesh cage.

In another embodiment, the second compartment may comprise an outer deformable plastic or wire mesh, together with a plastic coated inner wire or plastic mesh cylinder containing compressible fibres of plastic or wire precoated with the second component. When the first component enters the second compartment it is urged to percolate through the fibrous mass, blending en route with the second component before the mixture is expelled laterally through the inner mesh wall and subsequent outer wire or plastic mesh wall of the chamber.

In a further embodiment, the second compartment comprises an outer deformable wire or plastic mesh and an inner thin walled rigid plastic or metal cylinder housing an in-line mixing device e.g. a device sold under the trademark STATATUBE by T.A.H. Industries, Inc., U.S.A. Such a device comprises rigid plastic segments geometrically oriented so as to cause maximum interference with flow through the chamber. The second component in paste form is placed in a crosscut plastic cup secured in the upper end of a rigid plastic or metal cylinder. Entrance of the first component into the second compartment under pressure forces open the crosscut plastic cup sweeping the second component into the cylinder and through the static member.    Exit is provided at the bottom of the
cylinder, via saw-toothed openings, before final
extrusion laterally through the outer mesh of the second
compartment.

In yet another embodiment, a rubber seal e.g. a
rubber bung or cork is placed adjacent one end of a bag
containing the mastic resin composition.    The bung or
cork tapers toward the sack and a steel ring or washer is
positioned on the tapered bung or cork.    The second
component e.g. a catalyst paste is placed in a tube
located below the ring or washer and has radial openings.
Downward pressure displaces the seal away from the ring
or washer allowing the two ingredients to intermix and
be forced out of the radial openings of the tube.

It is a further preferred feature of the
invention that a protective cover or wrap be applied to
the inside or outside surface of the second compartment.
For example the second component can be distributed
evenly over the inside surface of a tubular plastic or
metal mesh screen placed inside the outer screen, and a
flexible plastic membrane, such as polyvinyl acetate,
polyvinyl chloride or polyvinyl acrylate, can be used
to cover the inner mesh screen.    The membrane or wrap seals the second component airtight in the second compartment, preventing the second component from drying
out during storage, and provides a continuous surface
of even distribution of the second component over the
inner surface of the mesh screen, thereby exposing the
maximum surface area for the two components to interact.
This allows substantially full transfer of the first
component into the second compartment, and some pressure
build-up to occur before bursting out by rupture through
the openings of the mesh screen by rupture of the flexible
plastic membrane.  Where wire mesh is the preferred
screen, the plastic membrane provides corrosion protection
from such materials that might constitute the second
component.

Most preferably the two compartments are arranged
in end-to-end relation and are held together by a splicing
collar.  The collar serves to align the two compartments
with respect to each other and the borehole in which the
cartridge is used, and also aligns the first compartment
with respect to the means for cutting the compartment open.

In use, the cartridge is located in a borehole,
the first compartment leading, and the anchor element to
be anchored e.g. a mechanical bolt, bar, rebar, wooden
dowel, glass fibre rod or other item capable of transmitting up to 1500 pounds of thrust is used to force the cartridge home, cut open the first compartment and mix the components and urge the mixture radially out of the second compartment.   For this the cartridge preferably includes an end wall or cap at the end of the second compartment for an end of the anchor element to bear on and to exert a longitudinal pressure on the cartridge.

In a specific aspect of the invention, there is provided an anchoring cartridge for use in anchoring an element in a borehole, the cartridge having two compartments held together in end-to-end relation by a splice collar, each compartment containing an interactive component of a selfsetting anchoring composition, one of the compartments having a wall having a perforable portion and containing a flowable interactive component, cutting means present in the collar arranged to perforate the perforable portion and urge the flowing component towards the second compartment, the second compartment having an outside wall at least part of which has radial exit openings, mixing means for mixing the two components in the second compartment, the second compartment having an end wall against which an anchor element may bear to exert axial pressure on the cartridge.

The invention further includes a method of anchoring an anchor element in a borehole in a substrate comprising placing in the hole a cartridge of the invention, followed by the anchor element and urging the element towards the bottom of the hole by a rectilinear motion to cause the opening means to open the first compartment and urge the first component into the second compartment and to urge a mixture of the first and second components laterally out of the second compartment into the borehole to anchor the element in the borehole.

Most preferably, the borehole is upwardly inclined.

Upon subjecting the cartridge to axial pressure, for example when rammed to the back of a borehole using a mechanical anchor bolt thrust against the end cap of the second compartment, the means for breaking open the first compartment mechanically ruptures the first compartment initially causing the resin mastic to be fed into the second compartment, via the holes in the upper bag, where it comes in contact with the hardener or catalyst paste. Sustained compressive thrust collapses the first compartment and the feeding of all of the resin mastic into the second compartment, accompanied by coincidental extrusion of both the reactive components radially through the fine mesh openings of the mesh wall.    By employing increased compressive thrust, progressive collapse of the second compartment results, expelling all mastic grout from within the chamber into the borehole and about the body of the anchor.    The other material e.g. the compartment walls and the cutting means is thrust to the blind end of the borehole and compressed into small volume and does not interfere in any way with the anchorage.

The self setting composition will be based on interactive components which may be solid or liquid or semi-liquid.    In a much preferred feature the composition comprises an unhardened resin and a hardener therefor, and may be based on epoxy, polyurethane, polyester, phenol formaldehyde, urea formaldehyde or melamine formaldehyde systems.    The composition will typically include fillers for example limestone, talc, silica, clays or the like.

An advantage of the invention is that in use the self setting composition is urged laterally or radially out of the second compartment to contact the sides of the anchor element and the opposite wall of the borehole.    In some prior systems where the self setting composition tends to be expelled parallel to the anchor element, there is a tendency for the self setting composition to be urged forward with the forward movement of the anchor element
and thus away from the position where it is really needed.


In order that the invention may be well understood, it will now be described with reference to the
accompanying diagrammatic drawings, in which:


Figure 1 is a perspective view of one
cartridge of the invention and 2 is an exploded perspective view of the cartridge,

Figure 3 is a sectional view of the cartridge
in use to anchor a mechanical bolt and Figure 4 is the
same view showing the anchored bolt;

Figure 5 is an exploded perspective view of
another cartridge of the invention; and

Figure 6 is a sectional view showing an anchor
bolt anchored using the cartridge of Figure 5.


Where possible the same reference numerals are
used to denote the same parts.


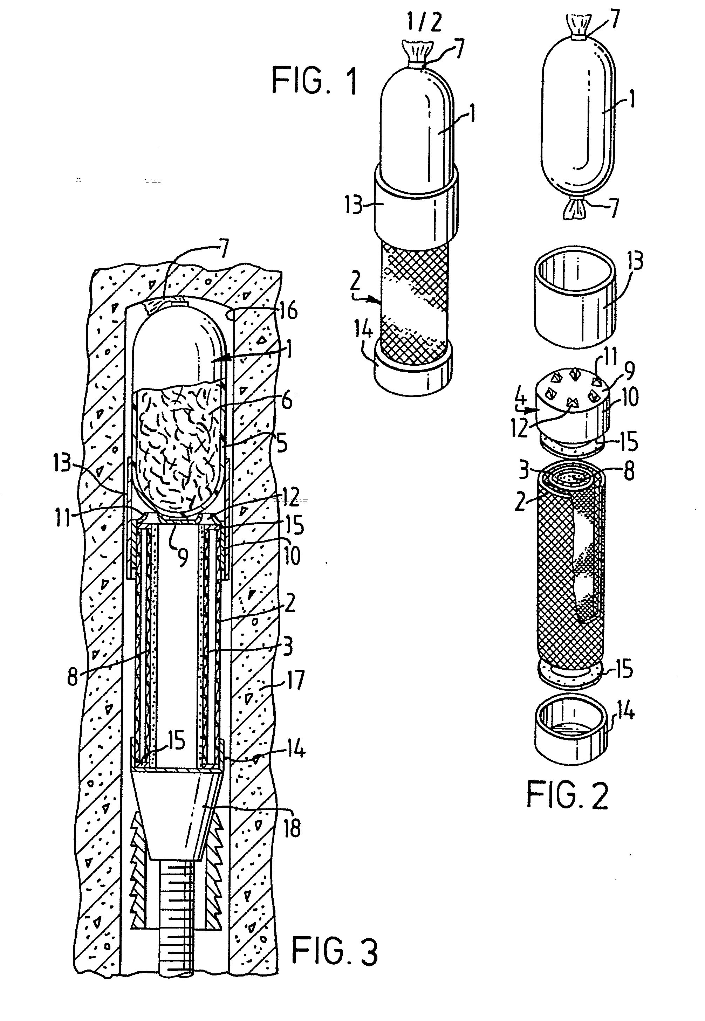

The cartridge of Figures 1 to 4 comprises a
first compartment in the form of a bag 1 disposed above
a second compartment in the form of concentric sleeves
2, 3, with a cutter 4 in between the compartments.   The
bag 1 has a wall 5 of a flexible plastics e.g. a MYLAR or polyester or polyethylene film, and is filled with paste of a filler and unhardened resin 6 e.g. polyester or epoxy paste.   The ends of the bag are sealed with clips 7.   The outer sleeve 2 of the second compartment is formed of a deformable metal or plastics mesh and has apertures ranging from about 4 x 4 to 10 x 10 per linear inch (2.54 cm).   The inner sleeve 3 is formed of plastics coated wire mesh and has openings at a density of about not less than 16 x 16 openings per linear inch (2.54 cm).   A paste 8 of a hardener or catalyst for the for the unhardened resin 6 is located within the inner sleeve 3.   As shown, the openings of the mesh are diamond shaped.

The cutter 4 comprises a disc 9 having a downwardly directed rim 10 within which is fitted the ends of sleeves 2, 3 of the second compartment.   Tangs 11 are struck in the disc to extend from the upper face towards the bag 1 and the striking of the tangs leave holes 12 in the parent disc.   The cutter 4 fits within a splice or collar 13 which also receives the lower end of the bag 1.   The lower end of the sleeves 2, 3 is received in an end cap 14.   The ends of the sleeves are held in their respective caps by a heat seal or grommet 15.

In use, the paste 8 is filled into the inner sleeve 3 and the sleeve is then fitted inside sleeve 2. The end cap 14 is then fitted.    A bag 1 is then placed on top of the cutter 4 and the splice collar 13 is slid over to hold the compartments together.    The cartridge so formed is fed into the blind end of a borehole 16 in a substrate 17 by being pushed upwards by a rectilinear motion using a mechanical anchor bolt or fixing device 18 applied to the lower end cap 14.    The tangs 11 break open the end of the bag 1 and as the bolt is pushed home unhardened resin 6 is urged through the holes 12 into contact with the hardener paste 8.    Continued pushing of the bolt 18 urges the resin and catalyst mix out of the second compartment via the openings in the sleeves 3 and 2 in the annulus between the cartridge and the wall of the bore 16.    The selfsetting mix thus moves radially out of the cartridge and not from the leading end.    Because the material is forced between two separate mesh walls it is well mixed.    Continued thrust urges all the mix out of the bag 1 and the sleeves tend to collapse and crumple and the bolt is driven almost to the blind end of the hole 16.    In this way, by an inward pressure caused by a rectilinear motion the resin cartridge has been used to anchor a mechanical bolt.

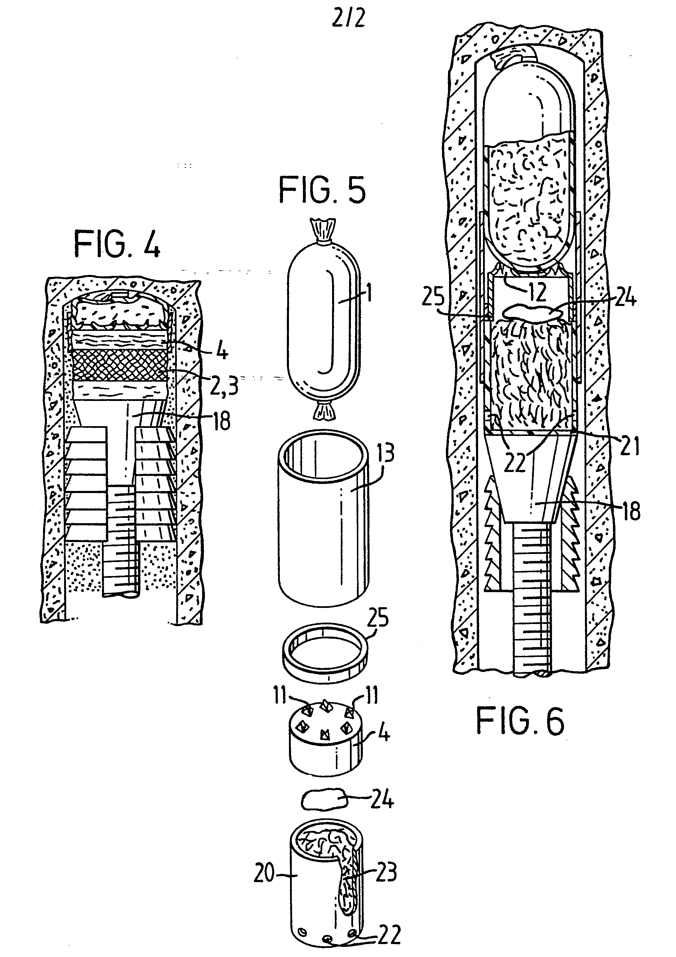

In the embodiment of Figure 5, the second
compartment comprises a tubular body 20 having a flat
bottom 21 against which the end of a bolt 18 may apply
a pressure.   Radially spaced apart holes 22 are formed
in the lower edge portion of the body.   A wire or
plastics mesh 23 is present in the body and a mass of
catalyst paste 24 is placed on the mesh 23.   A sealing
ring 25 is present to ensure that the body 23 and the
cutter 4 are received as a tight fit in the collar 13.
The cartridge of Figure 5 operates in the same way as the
cartridge of Figure 1 save that the resin/catalyst mix
is extruded radially out of the cartridge via the holes
22.   Because the materials have to be forced through the
mesh 23, they are well mixed together before they exit
from the holes 22.

The invention is further illustrated by the
following Examples in which all parts are by weight.

EXAMPLE 1

The first compartment of a cartridge as shown
in Figure 1 consisted of a 32mm diameter tube of polyester
laminate film as casing 3-1/2 inches (about 8.9 cm) long
and filled with 125g of unhardened polyester mastic
comprising moderately promoted unsaturated polyester (40.0), fumed silica (0.3 parts) and limestone filler (59.7 parts). The ends of the tube were sealed with clips.

12.5g of a catalyst paste comprising 25% benzoyl peroxide in butyl benzyl phthalate (60 parts), n-butyl phthalate (10 parts) and titanium dioxide (30 parts) paste was evenly spread over the inside surface of an inner plastics coated wire mesh tube 32 mm in diameter and 89mm long.  The tube so filled was inserted into a 1-3/8 inch (3.5 cm) diameter clear plastic tube closed at one end with a plastic cap.  A 5/8 inch (16 mm) diameter bail type mechanical anchor was inserted behind the cartridge so formed and the whole assembly placed upright between the platens of a Warner and Swasey testing machine.

Force was applied to the bolt in an upward direction such that the bolt moved into the cartridge assembly at a rate of one foot (30.5cm) per minute.  The following observations were made.

(i)        The bag 1 was punctured at 50 pounds thrust.

(ii)       The resin mastic 5 was extruded into the sleeve 3 at 60 pounds thrust.

(iii)      The mastic/paste mixture burst through the wire mesh screen 2 at 60-500 pounds thrust.

0063442

(iv)     The cartridge was crushed to a length of less than 2 cm at 500-1500 pounds thrust.

(v)      The extruded resin mastic solidified within 90 seconds and was all confined in the anchorage zone.

EXAMPLE 2

A total of ten 32 mm cartridges was prepared containing the mastic composition similar to Example 1, and tested underground in a coal mine using the following procedure.

A drill steel 1-3/8 (34.9mm) in diameter was measured and marked one inch (2.54 cm) longer than the mechanical bolt length.  Total length of the hole was 46 inches (116.8 cm).  A cartridge was inserted into the hole followed by a mechanical bolt 5/8 inch (15.9 mm) in diameter.  With the head of the bolt engaged in a chuck, the bolt and cartridge were lifted to the back of the hole.  The bolt was then torqued to 150 foot-pounds. The installation was completed within 30 seconds.  After all ten bolts were installed, the torque was remeasured on each bolt and was found to vary between 145 and 160 foot-pounds.  After one hour, one bolt was tensioned to 9 tons using a hydraulic jack at which point the bolt stretched and broke.

Inspection of the remaining bolts was made after four weeks. All of the resin bonded bolts retained their installed torque values indicating no slippage of the anchor.

CLAIMS

1.      An anchoring cartridge having two compartments,
each compartment containing an interactive component of
a selfsetting anchoring composition, means for breaking
open a first compartment to allow the first component
to enter the second compartment, <u>characterised in that</u>
the second compartment includes means to allow a mix of
the first and second components to pass laterally out of
the second compartment.

2.      A cartridge according to Claim 1, <u>characterised</u>
<u>in that</u> the first compartment is a flexible bag containing
a first component which is flowable under pressure and
the opening means is arranged to cut open part of the bag
wall and urge the first component towards the second
compartment.

3.      A cartridge according to any Claim 1 or 2,
<u>characterised in that</u> the second compartment has perforated
walls and the components are mixed as they pass through
the walls and radially out of the cartridge.

4.      A cartridge according to Claim 3, <u>characterised</u>
<u>in that</u> the second compartment comprises an inner mesh
sleeve containing a paste of the second component, the
inner sleve being spaced from and held within an outer
mesh sleeve, the meshes of the sleeves being arranged to
intermix the components as they are urged radially out of both sleeves.

5.     A cartridge according to any preceding Claim, characterised in that the first component is arranged to pass along at least part of the length of the second compartment before exiting from the second compartment via radial or side openings thereof.

6.     A cartridge according to Claim 5, characterised in that the second compartment includes means for mixing the components as they pass along the second compartment.

7.     A cartridge according to any of Claims 1, 2, 5 or 6, characterised in that the second compartment has radial exit holes remote from the point of entry of the first component and the two components are passed through a mixing mesh on route to the exit holes.

8.     A cartridge according to any of Claim 1 to 5, characterised in that the second compartment comprises an outer deformable wire or plastic mesh containing an inner cylinder filled with compressible material, and a cap containing the second component is inserted into one end of the cylinder and arranged to be opened under pressure to release the second component together with the first component into the cylinder, and the components are mixed as they pass along the cylinder.

9.      A cartridge according to any preceding Claim,
characterised in that a protective cover or wrap is
present on the inside or outside surface of the second
compartment.

10.      A cartridge according to any preceding Claim,
characterised in that the two compartments are arranged
in end-to-end relation and are held together by a splicing
collar.

11.      A cartridge according to Claim 10, characterised
in that the cartridge includes an end wall or cap at the
end of the second compartment for the anchor element to
bear on and to exert a longitudinal pressure on the cartridge.

12.      An anchoring cartridge for use in anchoring an
element in a borehole, the cartridge having two compartments
held together in end-to-end relation by a splice collar,
each compartment containing an interactive component of
a selfsetting anchoring composition, one of the compartments
having a wall having a perforable portion and containing
a flowable interactive component, cutting means present
in the collar arranged to perforate the perforable portion
and urge the flowing component towards the second
compartment, characterised in that the second compartment
has an outside wall at least part of which has radial exit
openings, mixing means for mixing the two components are

**0063442**

present in the second compartment and the second compartment has an end wall against which an anchor element may bear to exert axial pressure on the cartridge.

13.      A method of achoring an anchor element in a borehole in a substrate, <u>characterised in that</u> a cartridge according to any preceding Claim  is placed in the hole followed by the anchor element and the element is urged towards the bottom of the hole by a rectilinear motion to cause the opening means to open the first component into the second compartment and to urge a mixture of the first and second components laterally out of the second compartment into the borehole to anchor the element in the borehole.

FIG. 1

1/2

FIG. 2

FIG. 3

FIG. 4

FIG. 5

FIG. 6